# EUROPEAN PATENT APPLICATION

(11) **EP 4 354 996 A1**
(43) Date of publication of application: **17.04.2024**
(21) Application number: 22832046.1
(22) Date of filing: 28.06.2022
(51) Int. Cl.: H04W 72/04

(54) **BWP SWITCHING METHOD, NETWORK DEVICE, AND STORAGE MEDIUM**

(30) Priority: 29.06.2021 CN 202110727930
(71) Applicant: ZTE Corporation, Shenzhen, Guangdong 518057 (CN)
(72) Inventor: SI, Ya'nan, Shenzhen, Guangdong 518057 (CN)
(74) Representative: Boult Wade Tennant LLP
(86) International application number: PCT/CN2022/101920
(87) International publication number: WO 2023/274232

(57) **Abstract**

The present embodiments relate to the technical field of 5G communications, and in particular relate to a BWP switching method, a network device, and a storage medium. The BWP switching method of the present application is applied to a network device. The method comprises: when a working bandwidth of a network device is within a current BWP, if a terminal that has performed switching from the current BWP is detected, then it is determined that a BWP switching error is occurred with the terminal that has performed switching from the current BWP; and instructing the terminal with which the BWP switching error is occurred to switch to a target BWP and controlling the network device to switch to the target BWP.

## Description

### CROSS REFERENCE TO RELATED APPLICATIONS

The present application is proposed based on and claims priority to the Chinese Patent Application No. 2021107279307, filed on June 29, 2021, contents of which is incorporated herein by reference in its entirety.

### TECHNICAL FIELD

Embodiments of the present application relate to the technical field of 5G communications, in particular to a BWP switching method, a network device, and a storage medium.

### BACKGROUD

In a 5G new radio (NR) system, a system bandwidth, namely a bandwidth of a carrier wave, may become quite large (for example, 200 MHz or 400 MHz), some terminals have a limited capacity and cannot support a large bandwidth, so a network device will configure a bandwidth part (BWP) for the terminals, for example, 20 MHz, and the terminals may communicate with the network device over the configured BWP. The network device may configure a plurality of BWPs for the terminals, some of which have narrower bandwidths and others have wider bandwidths. Besides, at the same time, one terminal can have only one active BWP, the terminal can receive or send data only over the active BWP. If the terminal needs to transmit a large amount of data, the network device may instruct the terminal to switch to a BWP with a broad bandwidth; and if the terminal needs to transmit a small amount of data, the network device may instruct the terminal again to switch to a BWP with a narrow bandwidth.

The terminal may perform BWP switching through instruction of downlink control information (DCI), however, there is misdetection or false detection when detecting DCI by the terminal, which will enter a BWP switching process unilaterally, while the network device side does not configure a corresponding BWP for the terminal, resulting in interruption of a service of the terminal.

### SUMMARY

In a first aspect, an embodiment of the present application provides a BWP switching method, applied to a network device and including: in a case that a working bandwidth of a network device is within a current BWP and a terminal that has performed switching from the current BWP is detected, determining that a BWP switching error is occurred with the terminal that has performed switching from the current BWP; and instructing the terminal with which the BWP switching error is occurred to switch to a target BWP and controlling the network device to switch to the target BWP.

In a second aspect, an embodiment of the present application further provides a network device, including: at least one processor; and a memory in communication connection with the at least one processor; wherein the memory stores instructions executable by the at least one processor, and the instructions are executed by the at least one processor so as to cause the at least one processor to implement the above BWP switching method.

In a third aspect, an embodiment of the present application further provides a computer storage medium having stored thereon a computer program, which, when executed by a processor, implementing the above BWP switching method.

### BRIEF DESCRIPTION OF THE DRAWINGS

Fig. 1 is a flowchart of a BWP switching method provided according to an embodiment of the present application.
Fig. 2 is a schematic diagram of specific implementation of detecting whether a terminal has performed switching from a current BWP provided according to an embodiment of the present application.
Fig. 3 is a schematic diagram of specific implementation of instructing a terminal with which a BWP switching error is occurred to switch to a target BWP provided according to an embodiment of the present application.
Fig. 4 is a schematic diagram of specific implementation of a manner for providing a synchronous moment for the terminal provided according to an embodiment of the present application.
Fig. 5 is a schematic diagram of an implementation of instructing a terminal with which a BWP switching error is occurred to switch to a target BWP provided according to an embodiment of the present application.
Fig. 6 is a schematic diagram of an implementation of instructing a terminal with which a BWP switching error is occurred to switch to a target BWP provided according to an embodiment of the present application.
Fig. 7 is a structural block diagram of a network device provided according to an embodiment of the present application.

### DETAILED DESCRIPTION

Main objective of embodiments of the present application is providing a BWP switching method, a network device, and a storage medium, by which a BWP of a terminal may be adjusted for a BWP switching error of the terminal, so the BWP of the terminal keeps consistent with a BWP of a network device side, and thus stability of a service of the terminal is improved.

To make the objective, technical solutions and advantages of the embodiments of the present application clearer, the following describes the embodiments of the present application in detail with reference to accompanying drawings. Those ordinarily skilled in the art may understand that although many technical details have been provided in the embodiments of the present application to make readers better understand the present application, the technical solutions that the present application claims to protect may still be implemented without such technical details and various changes and modifications based on the following embodiments. Division of the following embodiments is for the purpose of convenient description but is not to constitute any limitation on specific implementations of the present application, and all the embodiments may be combined mutually or refer to one another under the premise of non-contradictory.

A 5G protocol may support BWP switching of the terminal, there are two common manners for BWP switching of the terminal, namely, one manner of BWP switching through radio resource control (RRC) reconfiguration signaling and the other manner of BWP switching through DCI. BWP switching based on RRC is used for enabling user equipment (UE) to immediately enter a proper BWP once the UE completes initial access and enters an RRC connected state or an RRC reconfiguration or a activation of secondary cell (Scell) so as to perform transceiving of a service instead of remaining on an initial BWP. During the initial access of the UE, the UE keeps using the initial BWP. Once the initial access is completed, the UE enters the RRC connected state, a base station may activate a BWP other than the initial BWP through firstActiveDownlinkBWP-Id and firstActiveUplinkBWP-Id, a bandwidth of the BWP is usually larger than that of the initial BWP.

If the terminal switches BWP by a DCI issued by the network device, the terminal may switch from a current BWP, when there is misdetection of DCI or false detection of DCI by the terminal. Due to that the network device does not issue the DCI actually, namely the terminal enters the BWP switching process unilaterally, while the network device remains in the current BWP state, an interruption of the service of the terminal is caused. For example, a working bandwidth of the network device is within BWP1, a working bandwidth of the terminal is also within BWP1, the current BWP refers to the BWP1, when the terminal enters the BWP switching process unilaterally, while the network device remains in the current BWP state, namely the working bandwidth of the network device remains within the BWP1, and now the working bandwidth of the terminal is within BWP2, resulting in interruption of the service of the terminal at this moment.

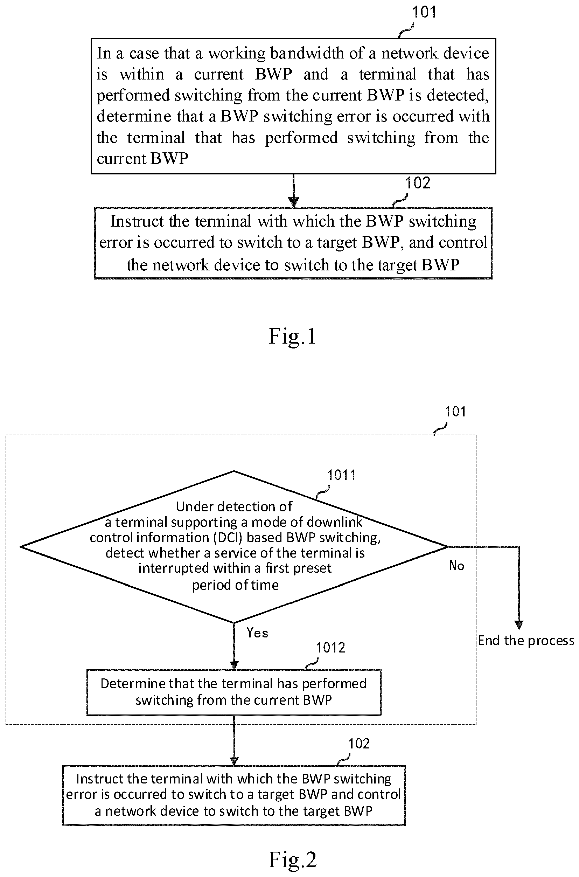

An embodiment of the present application relates to a BWP switching method, implemented by a network device, the network device is, for example, a base station, and a flow of the method is illustrated in Fig. 1.

Step 101: in a case that a working bandwidth of a network device is within a current BWP and a terminal that has performed switching from the current BWP is detected, it is determined that a BWP switching error is occurred with the terminal that has performed switching from the current BWP.

Specifically, the terminal may be a mobile device, such as a mobile phone, and the terminal may also be a computer, an Internet of Things device and the like. The base station may communicate with a plurality of terminals and may perform the following operations on each terminal in communication: the network device may detect whether the terminal supports a mode of DCI switching BWP, if the terminal does not support the mode of DCI switching BWP, a process of the BWP switching method of the present embodiment ends, and if the terminal supports the mode of DCI switching BWP, whether the terminal has performed switching from the current BWP may be further detected.

A manner of detecting whether the terminal has performed switching from the current BWP may be determined based on whether a service of the terminal is normal. As the terminal receives data only over an active BWP, if the terminal switches to a false BWP, consequently, the active BWP is inconsistent with the BWP of the network device, resulting in interruption of the service of the terminal, for example, call drop.

It needs to be noted that DCI misdetection or DCI false detection by the terminal leads to the BWP switching error occurred with the terminal, and if the terminal does not support the mode of DCI switching BWP, the subsequent process is not needed. The method of the present embodiment is implemented by the network device communicating with the terminal, and the terminal in communication supports the mode of DCI switching BWP.

Step 102: the terminal with which the BWP switching error is occurred is instructed to switch to a target BWP, and the network device is controlled to switch to the target BWP.

Specifically, if the terminal is configured with a plurality of dedicated BWPs and the terminal supports the mode of DCI switching BWP, the network device may instruct the terminal to switch to the target BWP in a manner of issuing DCI, where the target BWP may be a preset default BWP, and at the same time, the network device is controlled to switch to the default BWP. The default BWP is a preset BWP with a small bandwidth.

It needs to be noted that after a BWP state of the network device is consistent with a BWP state of the terminal, the process based on DCI switching BWP may be recovered.

According to the BWP switching method provided by the present application, if the BWP of the terminal is inconsistent with the BWP of the network device, the service between the terminal and the network device may be interrupted, and the use of the terminal is affected; in a case that the working bandwidth of the network device is within the current BWP and it is detected that the terminal has performed switching from the current BWP, it is determined that the BWP switching error is occurred with the terminal, the network device thus instructs the terminal to switch to the target terminal, the network device switches its BWP to the target BWP as well, such that the BWP of the network device is consistent with the BWP of the terminal, avoiding the interruption of the service of the terminal. As the BWP switching error occurred with the terminal may be discovered in time, the BWP state of the terminal may be optimized in time, stability of BWP switching is improved, call drop is avoided, and thus the stability of the service of the terminal is improved.

In an embodiment, a specific implementation of detecting whether the terminal has performed switching from the current BWP is provided, and a schematic diagram of this implementation is illustrated in Fig. 2.

Step 1011: in a case that the working bandwidth of the network device is within the current BWP, following operations are performed on each terminal communicating with the network device: under detection of the terminal supporting the mode of downlink control information (DCI) based BWP switching, whether the service of the terminal is interrupted within a first preset period of time is detected, if the service of the terminal is interrupted within the first preset period of time, step 1012 is performed, otherwise the process of the BWP switching method in the present application stops.

In an example, the process of detecting whether the service of the terminal is interrupted within the first preset period of time is: under detection of the terminal being in a discontinuous transmission (DTX) state at a moment T, whether the service of the terminal at a moment T-1 is normal is detected, if normal, then the service of the terminal is interrupted within the first preset period of time is determined, otherwise the service of the terminal is normal within the first preset period of time is determined, wherein T is an integer greater than 1.

Specifically, the first preset period of time includes the moment T and the moment T-1, the moment T may be a current detection moment, and the moment T-1 may be a previous detection moment. Under detection of the terminal being in the DTX state at the moment T, it indicates that the service of the terminal is interrupted currently; and at this moment, whether the service of the terminal is normal at the previous moment, namely the moment T-1, is detected, if the service of the terminal is normal at the moment T-1, namely the terminal is not in the DTX state, it may be determined that the service of the terminal is normal. When it is determined that the service of the terminal is normal at the moment T-1 and is interrupted at the moment T, it may be determined that the terminal has performed switching from the current BWP.

Step 1012: it is determined that the terminal has performed switching from the current BWP; and step 102 is performed.

Step 102: the terminal with which the BWP switching error is occurred is instructed to switch to a target BWP, and the network device is controlled to switch to the target BWP.

In the present embodiment, by detecting the service of the terminal, the network device determines whether the terminal has performed switching from the current BWP, if the terminal is on a correct active BWP, the service of the terminal may not be interrupted, based on this, in the embodiment, with a detection result of the current detection moment and a detection result of the previous detection moment, whether the terminal has performed switching from the current BWP may be determined accurately, avoiding misjudgment for the terminal that has performed false switching from the current BWP, and improving detection accuracy.

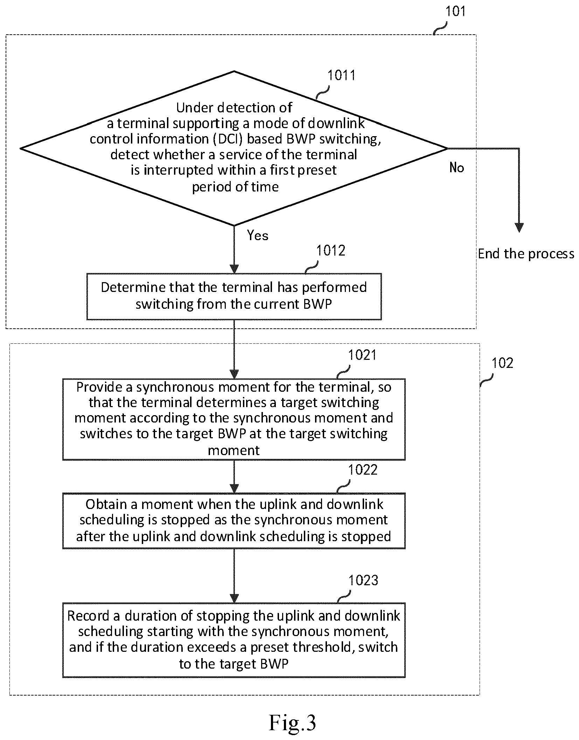

In an embodiment, a specific implementation of instructing the terminal with which the BWP switching error is occurred to switch to the target BWP is provided, and a schematic diagram of the implementation is illustrated in Fig. 3.

Step 1011: in a case that the working bandwidth of the network device is within the current BWP, following operations are performed on each terminal communicating with the network device: under detection of the terminal supporting the mode of downlink control information (DCI) based BWP switching, whether the service of the terminal is interrupted within a first preset period of time is detected, if the service of the terminal is interrupted within the first preset period of time, step 1012 is performed, otherwise the process of the BWP switching method in the present application stops.

Step 1012: it is determined that the terminal has performed switching from the current BWP. Step 1021 is performed.

Step 1021: a synchronous moment is provided for the terminal, so that the terminal determines a target switching moment according to the synchronous moment, and the terminal switches to the target BWP at the target switching moment.

Specifically, the target BWP may be set as a default BWP, and a BWP fall-back mechanism is started in a manner of providing the synchronous moment for the terminal. For example, instruction information may be issued to the terminal, the terminal uses a moment when the instruction information is received as the synchronous moment, and both the terminal and the network device use the synchronous moment as a timekeeping start point and simultaneously trigger the fall-back mechanism when reaching the preset target switching moment to fall back to the default BWP, so that the BWP of the terminal and the BWP of the network device keep consistent.

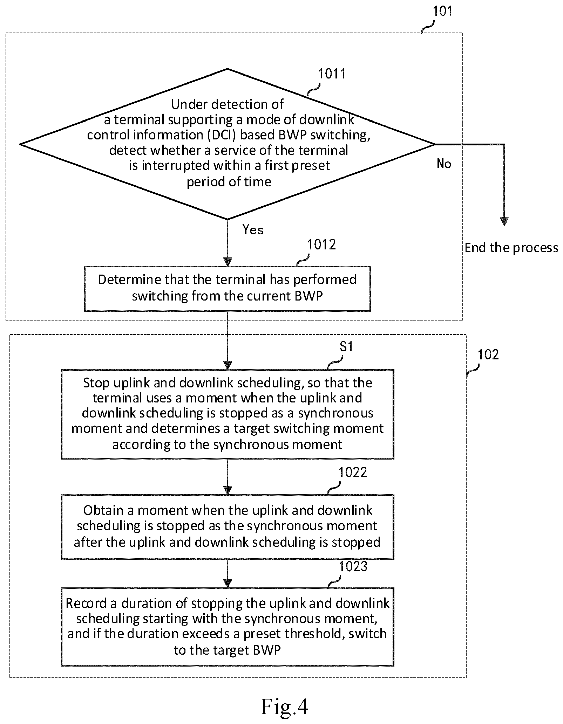

In another example, the manner of the providing the synchronous moment for the terminal may use a manner in step S 1, namely, a manner of a schematic diagram of Fig. 4 of the present embodiment.

Step S1: uplink and downlink scheduling is stopped, so that the terminal uses a moment when the uplink and downlink scheduling is stopped as the synchronous moment and determines the target switching moment according to the synchronous moment.

Specifically, the network device stops the uplink and downlink scheduling. As the network device stops the uplink and downlink scheduling, the terminal may use a moment when downlink control information for scheduling the terminal is not received as the synchronous moment, and the terminal uses the synchronous moment as the timekeeping start point and switches the BWP when reaching the target switching moment. For example, the duration of stopping the uplink and downlink scheduling may be counted from the synchronization moment, for example, a bwp-InactivityTimer is started for counting, and if the duration exceeds a preset threshold, it indicates that the target switching moment is reached.

Step 1022: the moment when the uplink and downlink scheduling is stopped is obtained as the synchronous moment after the uplink and downlink scheduling is stopped.

Similar to a process of the terminal obtaining the synchronous moment as described in step 1021, the network device obtains the moment when the uplink and downlink scheduling is stopped as the synchronous moment.

Step 1023: the duration of stopping the uplink and downlink scheduling is recorded starting with the synchronous moment, and if the duration exceeds the preset threshold, it switches to the target BWP.

Specifically, the network device records, starting with the synchronous moment, the duration of stopping the scheduling, and if the duration exceeds the preset threshold, it indicates that the target switching moment is reached. Likewise, counting of the duration may be implemented through the bwp-InactivityTimer. In other words, starting with the synchronous moment, the bwp-InactivityTimer is started, if the duration recorded by the bwp-InactivityTimer exceeds the preset threshold, then the terminal and the network device enter the BWP fall-back mechanism synchronously and both fall back to the corresponding default BWP.

In the present embodiment, by providing the synchronous moment for the terminal by the network device, the terminal and the network device may determine the target switching moment based on the synchronous moment, the terminal and the network device switch to the target BWP synchronously when reaching the target switching moment, and it may be guaranteed that the BWP states of the both are consistent due to synchronous switching. Besides, the synchronous moment is provided for the terminal in a manner of stopping the uplink and downlink scheduling, so that no service is performed between the terminal and the network device during switching, and influence on the service of the terminal is reduced.

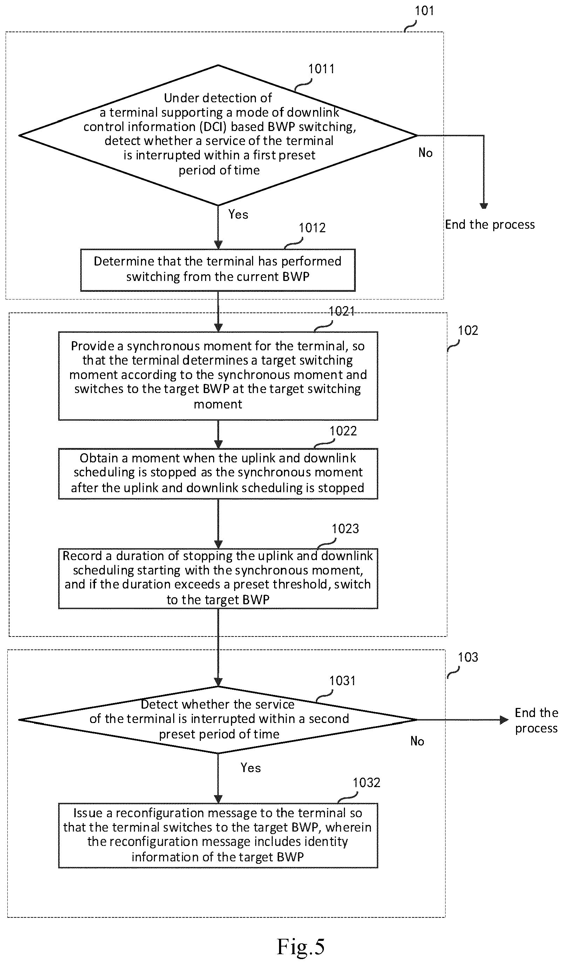

In an embodiment, another implementation of instructing the terminal with which the BWP switching error is occurred to switch to the target BWP is provided, and a schematic diagram of the implementation is illustrated in Fig. 5.

Step 1011: in a case that the working bandwidth of the network device is within the current BWP, following operations are performed on each terminal communicating with the network device: under detection of the terminal supporting the mode of downlink control information (DCI) based BWP switching, whether the service of the terminal is interrupted within a first preset period of time is detected, if the service of the terminal is interrupted within the first preset period of time, step 1012 is performed, otherwise the process of the BWP switching method in the present application stops.

Step 1012: it is determined that the terminal has performed switching from the current BWP. If it is determined that the terminal has performed switching from the current BWP, step 1021 is performed.

Step 1021: a synchronous moment is provided for the terminal, so that the terminal determines a target switching moment according to the synchronous moment, and the terminal switches to the target BWP at the target switching moment.

Step 1022: the moment when the uplink and downlink scheduling is stopped is obtained as the synchronous moment after the uplink and downlink scheduling is stopped.

Step 1023: the duration of stopping the uplink and downlink scheduling is recorded starting with the synchronous moment, and if the duration exceeds the preset threshold, it switches to the target BWP.

Step 1031: after the network device switches to the target BWP at the target switching moment, whether a service of the terminal is interrupted within a second preset period of time is detected, if it is determined that the service of the terminal is interrupted within the second preset period of time, then step 1032 is performed, otherwise the entire process is ended.

Specifically, in order to further guarantee the consistency of the BWP of the terminal and the BWP of the network device, the present embodiment further includes, after step 1023, performing step 1031, namely, whether the service of the terminal is interrupted within the second preset period of time is detected, the second preset period of time may include the current detection moment, and the detection manner is similar to the manner of step 1011.

After the terminal and the network device switch to the target BWP, whether all services of the terminal are in the DTX state is detected, and if yes, it indicates that the BWP of the terminal is different from the BWP of the network device currently.

Step 1032: a reconfiguration message is issued to the terminal so that the terminal switches to the target BWP, wherein the reconfiguration message includes identity information of the target BWP.

The network device may issue the reconfiguration message, the reconfiguration message includes: an BWP identity for first active of downlink firstActiveDownlinkBWP-Id and an BWP identity for first active of uplink firstActiveUplinkBWP-Id. A format of the reconfiguration message may use DCI1_0. After the terminal receives the reconfiguration message, the BWP is forced to be switched again, so that the BWP of the terminal and the BWP of the network device are consistent. In this step, a target BWP is reset, for example, the target BWP of the terminal may be the configured firstActiveDownlinkBWP-Id and firstActiveUplinkB WP-Id.

Step 1031 and step 1032 are two sub-steps of step 103, as illustrated in Fig. 5.

In the present embodiment, the terminal is detected again, if it is detected that all services of the terminal are still interrupted, the network device forces the terminal to perform BWP switching, and thus it is guaranteed that the BWP of the terminal and the BWP of the network device are consistent.

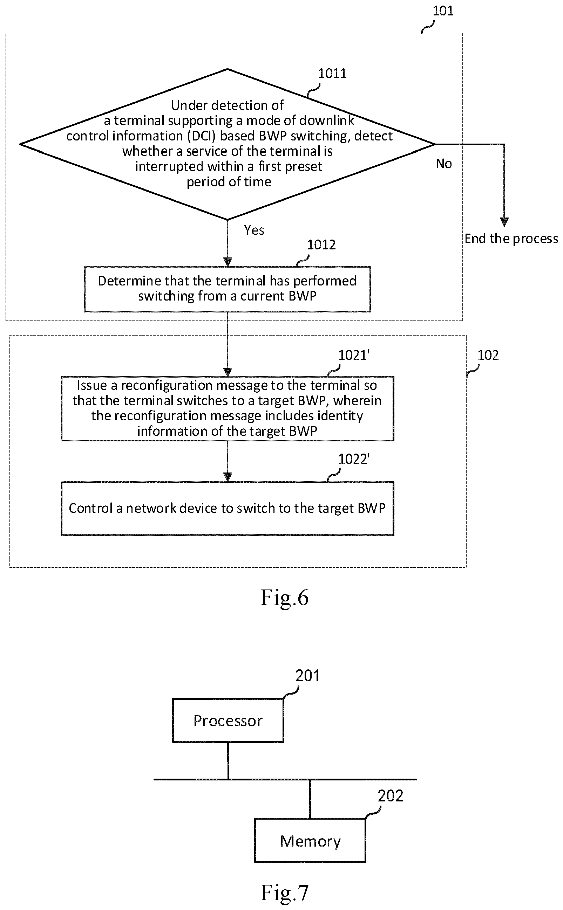

In an embodiment, another implementation of instructing the terminal with which the BWP switching error is occurred to switch to the target BWP is provided, and a schematic diagram of the implementation is illustrated in Fig. 6.

Step 1011: in a case that the working bandwidth of the network device is within the current BWP, following operations are performed on each terminal communicating with the network device: under detection of the terminal supporting the mode of downlink control information (DCI) based BWP switching, whether the service of the terminal is interrupted within a first preset period of time is detected, if the service of the terminal is interrupted within the first preset period of time, step 1012 is performed, otherwise the process of the BWP switching method in the present application stops.

Step 1012: it is determined that the terminal has performed switching from the current BWP. Step 1021' is performed.

Step 1021': a reconfiguration message is issued to the terminal so that the terminal switches to the target BWP, wherein the reconfiguration message includes identity information of the target BWP.

The network device may issue the reconfiguration message, the reconfiguration message includes: an BWP identity for first active of downlink firstActiveDownlinkBWP-Id and an BWP identity for first active of uplink firstActiveUplinkBWP-Id. A format of the reconfiguration message may use DCI1_0. After the terminal receives the reconfiguration message, the BWP is forced to be switched, so that the BWP of the terminal and the BWP of the network device are consistent. The target BWP of the terminal may be the configured firstActiveDownlinkBWP-Id and firstActiveUplinkBWP-Id.

Step 1022': the network device is controlled to switch to the target BWP.

If the BWP of the network device is not within a preset first active BWP, the first active BWP is used as the target BWP; and the network device is controlled to switch to the target BWP. If the BWP of the network device has been within the first active BWP, and in order to guarantee that the BWP of the network device is consistent with the BWP of the terminal, switching may be performed again.

It needs to be noted that before the network device issues the reconfiguration message, the network device may stop the uplink and downlink scheduling for the terminal, and after the terminal switches to the target BWP, the network device recovers the uplink and downlink scheduling for the terminal.

In the present embodiment, the network device directly forces the terminal to switch the BWP, and the switching manner is simple.

An embodiment of the present application further relates to a network device, a structural block diagram thereof is illustrated in Fig. 7, and the network device includes: at least one processor 201; and a memory 202 in communication connection with the at least one processor 201; wherein the memory 202 stores instructions executable by the at least one processor 201, and the instructions, when executed by the at least one processor 201, cause the at least one processor 201 to implement the above channel scene recognition method.

The memory 202 and the processor 201 are connected through a bus, the bus may include any number of interconnected buses and bridges, and the bus links various circuits of one or more processors and the memory 202. The bus may also link various other circuits such as a peripheral device, a voltage stabilizer and a power management circuit, which are well-known in the art and therefore, will not be further described herein. A bus interface provides an interface between the bus and a transceiver. The transceiver may be an element or a plurality of elements, for example, a plurality of receivers and transmitters, which provide units for communicating with various other devices on a transmission medium. Data processed by the processor 201 is transmitted on a wireless medium through an antenna, further, the antenna further receives data and transmits the data to the processor 201.

The processor 201 is responsible for managing the bus and general processing, and may further provide various functions, including timing, a peripheral interface, voltage regulation, power supply management and other control functions. The memory 202 may be configured to store data used when the processor performs operations.

An embodiment of the present application relates to a computer-readable storage medium having stored thereon a computer program, which, when executed by a processor, implementing the above channel scene recognition method.

Those skilled in the art may understand that implementation of all or some steps in the method in the above embodiment may be completed by instructing related hardware through a program, and the program is stored in a storage medium and includes a plurality of instructions so as to cause one device (which may be a single chip microcomputer, a chip or the like) or a processor to implement all or some steps in the method according to the embodiments of the present application. The above storage medium includes: a U disk, a mobile hard disk drive, a read-only memory (ROM), a random access memory (RAM), a diskette, an optical disc or various media capable of storing program code.

Those ordinarily skilled in the art may understand that the above implementations are specific embodiments for implementing the present application. In actual applications, various changes may be made in form or details without departing from the spirit and the scope of the present application.

## Claims

1. A BWP switching method, applied to a network device, the method comprising:
determining that, in a case that a working bandwidth of a network device is within a current BWP and if a terminal that has performed switching from the current BWP is detected, a BWP switching error is occurred with the terminal that has performed switching from the current BWP; and
instructing the terminal with which the BWP switching error is occurred to switch to a target BWP and controlling the network device to switch to the target BWP.

2. The BWP switching method of claim 1, wherein in a case that the working bandwidth of the network device is within the current BWP and if the terminal that has performed switching from the current BWP is detected, comprising:
performing following operations on each terminal communicating with the network device, in a case that the working bandwidth of the network device is within the current BWP: detecting whether a service of the terminal is interrupted within a first preset period of time, under detection of the terminal supporting the mode of downlink control information (DCI) based BWP switching; and
determining that the terminal has performed switching from the current BWP, if it is determined that the service of the terminal is interrupted within the first preset period of time.

3. The BWP switching method of claim 2, wherein detecting whether the service of the terminal is interrupted within the first preset period of time comprising:
detecting whether the service of the terminal is normal at a moment T-1, under detection of the terminal being in a discontinuous transmission (DTX) state at a moment T; if normal, then determining that the service of the terminal is interrupted within the first preset period of time; otherwise, determining that the service of the terminal is normal within the first preset period of time, wherein T is an integer greater than 1.

4. The BWP switching method of any one of claims 1 to 3, wherein instructing the terminal with which the BWP switching error is occurred to switch to the target BWP comprising:
providing a synchronous moment for the terminal, so that the terminal determines a target switching moment according to the synchronous moment, and the terminal switches to the target BWP at the target switching moment.

5. The BWP switching method of claim 4, wherein providing synchronous moment information for the terminal comprising:
stopping uplink and downlink scheduling, so that the terminal uses a moment when the uplink and downlink scheduling is stopped as the synchronous moment and determines the target switching moment according to the synchronous moment.

6. The BWP switching method of claim 5, wherein controlling the network device to switch to the target BWP comprising:
obtaining the moment when the uplink and downlink scheduling is stopped as the synchronous moment after the uplink and downlink scheduling is stopped; and
recording a duration of stopping the uplink and downlink scheduling starting with the synchronous moment, and if the duration exceeds a preset threshold, switching to the target BWP.

7. The BWP switching method of any one of claims 4 to 6, further comprising:
detecting whether a service of the terminal is interrupted within a second preset period of time, after the network device switches to the target BWP at the target switching moment, and issuing a reconfiguration message to the terminal so that the terminal switches to the target BWP, if it is determined that the service of the terminal is interrupted within the second preset period of time, wherein the reconfiguration message comprises identity information of the target BWP.

8. The BWP switching method of any one of claims 1 to 3, wherein instructing the terminal with which the BWP switching error is occurred to switch to the target BWP comprising:
issuing a reconfiguration message to the terminal so that the terminal switches to the target BWP, wherein the reconfiguration message comprises identity information of the target BWP.

9. A network device, comprising:
at least one processor; and
a memory in communication connection with the at least one processor; wherein
the memory stores instructions executable by the at least one processor, and the instructions, when executed by the at least one processor, cause the at least one processor to implement the BWP switching method of any one of claims 1 to 8.

10. A computer storage medium having stored thereon a computer program, which, when executed by a processor, implementing the BWP switching method of any one of claims 1 to 8.
